# EUROPÄISCHE PATENTANMELDUNG

(11) **EP 1 855 180 A2**
(43) Veröffentlichungstag der Anmeldung: **14.11.2007**
(21) Anmeldenummer: 07003346.9
(22) Anmeldetag: 16.02.2007
(51) Int. Cl.: G06F 1/32

(54) **Bildschirmgerät und Verfahren zur Steuerung eines Bildschirmgeräts in einen Energiesparzustand**

(30) Priorität: 08.05.2006 DE 102006021388
(71) Anmelder: Fujitsu Siemens Computers GmbH, 80807 München (DE)
(72) Erfinder: Schulz, Rüdiger, 86399 Bobingen (DE)
(74) Vertreter: Epping - Hermann - Fischer

(57) **Zusammenfassung**

Die Erfindung betrifft ein Bildschirmgerät (1) mit einer Anzeigeeinheit (9) und einem Signaleingang (3) zum Anschluss an einen Computer (2). Das Bildschirmgerät ist dadurch gekennzeichnet, dass es eine Energiesparzustandssteuerung (8) mit einer Überwachungseinheit (11) aufweist, zur Feststellung ob die am Signaleingang (3) anliegenden Bildsignale während einer vorbestimmten Zeit vorbestimmten Kriterien genügen. Bei positiver Feststellung ist die Energiesparzustandssteuerung (8) dazu eingerichtet, das Bildschirmgerät (1) in einen Energiesparzustand mit verringertem Energieverbrauch zu steuern.

## Beschreibung

Die Erfindung betrifft ein Bildschirmgerät mit einer Anzeigeeinheit und einem Signaleingang zum Anschluss an einen Computer und ein Verfahren zur Steuerung eines Bildschirmgeräts ausgehend von einem Normalbetriebszustand in einen Energiesparzustand.

Bildschirmgeräte in Form von Röhrenmonitoren oder Flachbildschirmen sind vielfach bekannt. In Verbindung mit einem Computer sind Bildschirmgeräte in einem dauernden Betrieb. Die reine Benutzungszeit, das heißt die Zeit, während der sich der angezeigte Bildschirminhalt in Folge der Bedienung des Computers durch einen Benutzer verändert, beträgt hingegen oft nur einen Bruchteil der Betriebszeit. Bildschirmgeräte können dadurch dauerhaft beschädigt werden, beispielsweise durch Einbrennen eines Elektronenstrahls bei Röhrenmonitoren. Auch TFT-Monitoren haben einen Memory-Effekt: bei einem sich nicht verändernden Bildinhalt richten sich die Flüssigkristall-Moleküle in einer bestimmten Art und Weise aus und können träge werden, wenn sie nicht bewegt werden. Der Effekt ist wie beim Einbrennen bei Röhrenmonitoren irreversibel, kann aber z.B. durch den Einsatz eines Bildschirmschoners wirksam verhindert werden.

Um Bildschirmgeräte vor einer dauerhaften Beschädigung zu schützen, ist es bekannt, dass ein Computer ein angeschlossenes Bildschirmgerät in einen Energiesparzustandes steuert. Dies kann entsprechend dem VESA-DPM-Standard erfolgen.

Die Zeitdauer, bis ein angeschlossenes Bildschirmgerät in den Energiesparzustand wechselt, wird vom Benutzer im Betriebssystem eines Computers eingestellt. Nach Ablauf dieser vorbestimmten Zeit steuert der Computer das angeschlossene Bildschirmgerät in einen Energiesparzustand.

Der Erfindung liegt die Aufgabe zugrunde, eine verbesserte Energiespar- und Schutzfunktion für ein Bildschirmgerät anzugeben.

Die Aufgabe wird erfindungsgemäß durch ein Bildschirmgerät mit einer Anzeigeeinheit und mit einem Signaleingang zum Anschluss an einen Computer gelöst, das dadurch gekennzeichnet ist, dass das Bildschirmgerät eine Energiesparzustandssteuerung aufweist mit einer Überwachungseinheit zur Feststellung, ob die am Signaleingang anliegenden Bildsignale während einer vorbestimmten Zeit vorbestimmten Kriterien genügen, wobei die Energiesparzustandssteuerung dazu eingerichtet ist, bei positiver Feststellung das Bildschirmgerät in einen Energiesparzustand mit verringertem Energieverbrauch zu steuern.

Zur Lösung der Aufgabe wird ebenfalls ein Verfahren zur Steuerung eines Bildschirmgeräts in einen Energiesparzustand mit den Merkmalen des Anspruchs 13 angegeben. Demnach schaltet ein Bildschirmgerät in einen Energiesparzustand, wenn die am Signaleingang anliegenden Bildsignale über eine vorbestimmte Zeit vorbestimmten Kriterien genügen.

In einer vorteilhaften Ausführung verfügt die Energiesparzustandssteuerung über einen Zeitmesser. Der aktuelle Wert des Zeitmessers wird von der Energiesparzustandssteuerung mit einem vordefinierten Wert verglichen. Der vordefinierte Wert entspricht der vorbestimmten Zeit, nach Ablauf derer das Bildschirmgerät von der Energiesparzustandssteuerung in den Energiesparzustand gesteuert wird, wenn die am Signaleingang anliegenden Bildsignale den vorbestimmten Kriterien genügen. Erfüllen die am Signaleingang anliegenden Bildsignale die vorbestimmten Kriterien nicht, wird der Zeitmesser von der Überwachungseinheit der Energiesparzustandssteuerung auf einen Startwert zurückgesetzt.

In einer weiteren vorteilhaften Ausführung wird das Bildschirmgerät von der Energiesparzustandssteuerung in den Energiesparzustand gesteuert, wenn die vorbestimmten Kriterien dadurch erfüllt sind, dass der durch die Bildsignale bestimmte Bildinhalt über die vorbestimmte Zeit unverändert bleibt.

In einer weiteren vorteilhaften Ausführung wird das Bildschirmgerät von der Energiesparzustandssteuerung in den Energiesparzustand gesteuert, wenn die vorbestimmten Kriterien dadurch erfüllt sind, dass sich der durch die Bildsignale bestimmte Bildinhalt über die vorbestimmte Zeit nach einem festen Muster ändert.

Die Energiesparzustandssteuerung bleibt während des Energiesparzustands eines Bildschirmgeräts insofern aktiviert, dass die Bildinhalte der von einem Computer zum Bildschirmgerät übertragenen Bildsignale überwacht werden. Wird hierbei festgestellt, dass die Bildsignale nicht den vorbestimmten Kriterien genügen, wird das Bildschirmgerät in einen Normalbetriebszustand zurückgesteuert.

Weitere Einzelheiten und Ausgestaltungen der Erfindung sind in den Unteransprüchen angegeben.

Die Erfindung wird nachfolgend an Ausführungsbeispielen anhand der Zeichnungen näher erläutert.

Die Begriffe "Bildsignal" oder "Bildinhalt" werden im Folgenden nebeneinander verwendet, wobei es zur Bestimmung, ob vorbestimmte Kriterien erfüllt sind, zumeist auf die Bildinhalte ankommt.

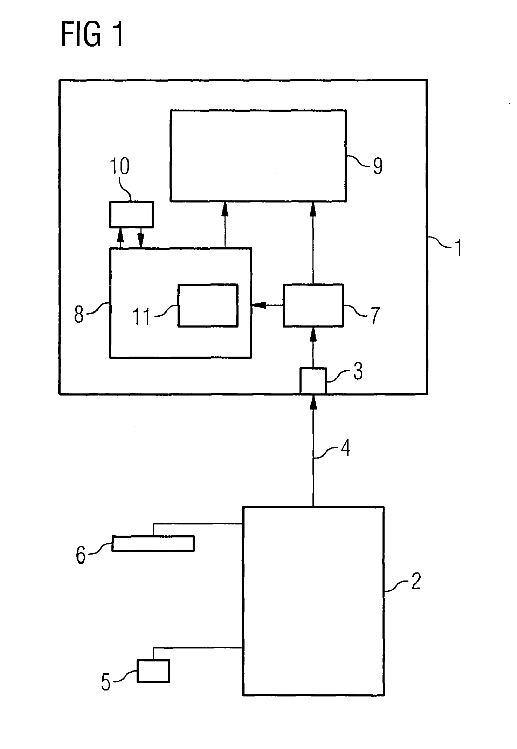

Figur 1 zeigt als erstes Ausführungsbeispiel eine Anordnung bestehend aus einem Bildschirmgerät 1 und einem Computer 2. Das Bildschirmgerät 1 weist einen Signaleingang 3 auf, der über eine Anschlussleitung 4 mit dem Signalausgang des Computers 2 verbunden ist. An den Computer 2 sind eine Computermaus 5 und eine Tastatur 6 angeschlossen.

Das Bildschirmgerät 1 weist eine Steuereinheit 7, eine Energiesparzustandssteuerung 8 und eine Anzeigeeinheit 9, die zur Anzeige eines über den Signaleingang 3 empfangenen Bildsignals eingerichtet ist, auf. Die Energiesparzustandssteuerung 8 ist mit einem Zeitmesser 10 verbunden und weist eine Überwachungseinheit 11 auf.

Ein vom Bildschirmgerät 1 über den Signaleingang 3 empfangenes Bildsignal wird von der Steuereinheit 7 an die Anzeigeeinheit 9 weitergeleitet. Die Steuereinheit 7 leitet die in den Bildsignalen enthaltenen Informationen zum Bildinhalt an die Energiesparzustandssteuerung 8 und parallel an die Anzeigeeinheit 9 weiter. Die empfangenen Bildinhalte werden von der Überwachungseinheit 11 überprüft. Die Anzeigeeinheit 9 wird auch von der Energiesparzustandssteuerung 8 angesteuert um beispielsweise die Hintergrundbeleuchtung im Energiesparzustand abzuschalten.

In einem Normalbetriebszustand wird das Bildsignal über den Signaleingang 3 empfangen und von der Steuereinheit 7 an die Anzeigeeinheit 9 weitergeleitet. Das vom Computer 2 erzeugte Bildsignal wird dann auf der Anzeigeeinheit 9 des Bildschirmgeräts 1 angezeigt.

Bildinhalte werden von der Überwachungseinheit 11 über die Steuereinheit 7 empfangen und in einem Bildspeicher gespeichert. Mit einem Bildvergleicher der Überwachungseinheit 11 wird der Bildinhalt eines Folgebildes kontinuierlich mit dem im Bildspeicher gespeicherten Bildinhalt verglichen. Dazu wird in diesem Ausführungsbeispiel der Bildinhalt des Folgebildes ebenfalls im Bildspeicher gespeichert.

Genügt der Bildinhalt des Folgebildes vorbestimmten Kriterien nicht, wird der Zeitmesser 10 von der Überwachungseinheit 11 auf einen Startwert zurückgesetzt. Die vorbestimmten Kriterien sind vorzugsweise ein sich nicht verändernder Bildinhalt, oder ein sich nach einem bestimmten Muster verändernder Bildinhalt.

Das Kriterium eines sich nach einem bestimmten Muster verändernder Bildinhalts ist beispielsweise erfüllt, wenn der von der Anzeigeeinheit 9 angezeigte Bildinhalt einen blinkenden Cursor beinhaltet, dessen Position sich nicht verändert. Auch ein aktivierter Bildschirmschoner erfüllt beispielsweise das Kriterium eines sich nach einem bestimmten Muster verändernder Bildinhalts.

Genügt der Bildinhalt des zweiten Bildsignals den vorbestimmten Kriterien, wird die vom Zeitmesser 10 seit der letzten Änderung eines empfangenen Bildinhalts erfasste Zeit von der Energiesparzustandssteuerung 8 mit einem vordefinierten Wert verglichen. Ist der aktuelle Wert der vom Zeitmesser 10 erfassten Zeit größer als der vordefinierte Wert wird das Bildschirmgerät 1 von der Energiesparzustandssteuerung 8 in einen Energiesparzustand mit verringertem Energieverbrauch gesteuert. Genügt der zweite Bildinhalt den vorbestimmten Kriterien nicht, wird der Zeitmesser 10 zurückgesetzt und der zweite Bildinhalt wird als erster Bildinhalt für nachfolgende Vergleiche herangezogen.

Im Energiesparzustand sind Komponenten des Bildschirmgeräts 1 abgeschaltet. Bei einem Röhrenbildschirmgerät könnten beispielsweise die Kathodenheizung und die Hochspannung abgeschaltet werden. Der Energiesparzustand eines LCD-Monitors zeichnet sich beispielsweise dadurch aus, dass die Hintergrundbeleuchtung und die 12 V Treiberspannung für das LCD-Pannel abgeschaltet werden. Dadurch wird die Anzeigeeinheit 9 von der Energiesparzustandssteuerung 8 so angesteuert, so dass kein Bildsignal angezeigt wird.

Befindet sich das Bildschirmgerät 1 im Energiesparzustand und wird beispielsweise vom Benutzer eines Computers 2 die Computermaus 5 bewegt, bewegt sich auch der Mauszeiger. Das hat eine Änderung der vom Computer 2 zum Bildschirmgerät 1 übertragenen Bildsignale und damit der Bildinhalte zur Folge. Eine derartige Änderung eines Bildinhalts bewirkt, dass das Bildschirmgerät 1 von der Energiesparzustandssteuerung 8 aus dem Energiesparzustand zurück in den Normalbetriebszustand gesteuert wird.

Hingegen sind in einem Zustand der Nichtaktivität, das heißt, ein Benutzer benutzt den Computer 2 nicht, die vom Computer 2 an das Bildschirmgerät übertragenen Bildsignale gleich und das Bildschirmgerät 1 bleibt im Energiesparzustand.

Durch das Verwenden eines erfindungsgemäßen Bildschirmgeräts 1 kann der Wert für die vorbestimmte Zeit, nach Ablauf derer das Bildschirmgerät in den Energiesparzustand schaltet, über ein Einstellmenü des Bildschirmgeräts 1 vom Benutzer eingestellt werden. Des Weiteren ist die Steuerung des Bildschirmgeräts 1 in den Energiesparzustand deaktivierbar. Damit ermöglicht das erfindungsgemäße Bildschirmgerät 1 auch eine Benutzung ausschließlich nach dem bekannten Stand der Technik, bei dem vom Computer 2 die Einnahme eines Energiesparzustands signalisiert wird. Andererseits ist bei einem erfindungsgemä-ßen Bildschirmgerät 1 das Schalten in einen Energiesparzustand ermöglicht, auch wenn der Computer 2 nicht dazu eingerichtet ist.

Eine Signalisierung vom Computer 2 an das Bildschirmgerät 1 zur Einnahme eines Energiesparzustandes nach dem bekannten Stand der Technik kann bei Verwenden eines erfindungsgemäßen Bildschirmgeräts 1 deaktiviert werden oder ganz entfallen.

Bei dem Computer 2 handelt es sich beispielsweise um einen Personalcomputer mit einer eingebauten Grafikkarte. Beispielsweise kann eine VGA-Grafikkarte dazu verwendet werden, ein Bildsignal an einem Bildausgang des Computers 2 bereitzustellen. Allerdings ist die Art der Erzeugung der Bildsignale nicht wesentlich für die Erfindung, da ein erfindungsgemäßes Bildschirmgerät 1 unabhängig von der Ausgestaltung des Computers 2, mit dem es verbunden ist, funktioniert. Darzustellende Bildsignale werden über analoge oder digitale Signale vom Computer 2 an das Bildschirmgerät 1 übertragen.

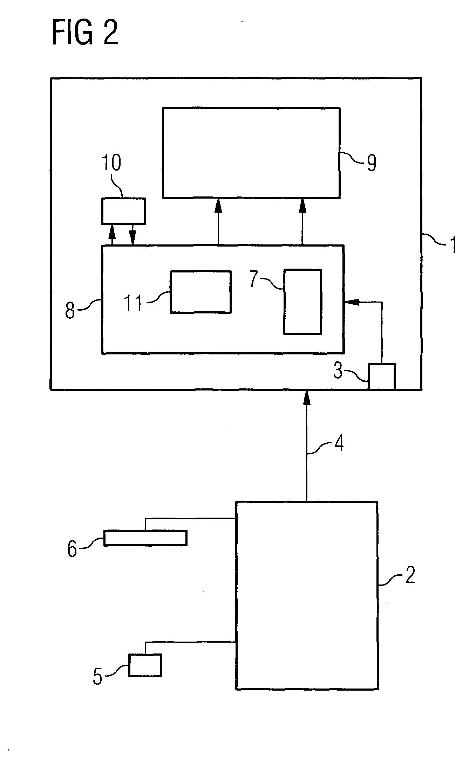

Figur 2 zeigt ein weiteres Ausführungsbeispiel. Die Steuereinheit 7 ist in die Energiesparzustandssteuerung 8 integriert. Die vom Bildschirmgerät 1 empfangenen Bildsignale werden von der Energiesparzustandssteuerung 8 an die Anzeigeeinheit 9 weitergeleitet. Vorzugsweise wird die Ansteuerung der Anzeigeeinheit 9 zur Anzeige eines Bildsignals getrennt von der Steuerung in einen Energiesparzustand, um eine Verfälschung oder Verzögerung des Bildsignals zu vermeiden. Die Steuerung des Bildschirmgeräts 1 in den Energiesparzustand durch die Energiesparzustandssteuerung 8 erfolgt dann, wenn die am Signaleingang 3 anliegenden Bildsignale den vorbestimmten Kriterien während der vorbestimmten Zeit genügen.

Weitere Ausführungsbeispiele, in denen beispielsweise die Steuereinheit 7 eine Überwachungseinheit 11 aufweist und nur das Ergebnis einer Überprüfung des Bildinhaltes anliegender Bildsignale an die Energiesparzustandssteuerung 8 weitergeleitet wird, werden hier nicht im Einzelnen weiter erläutert, sind aber von der Erfindung umfasst.

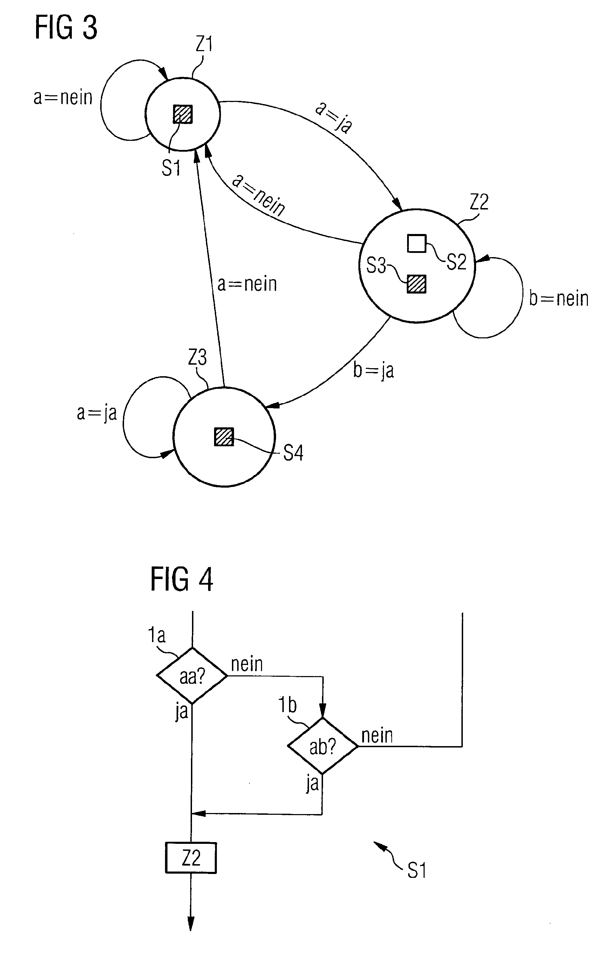

Figur 3 zeigt ein Zustandsdiagramm eines Verfahrens zur Steuerung des Bildschirmgeräts 1 in den Energiesparzustand nach einer Ausgestaltung der Erfindung. Wie nachfolgend im Detail erläutert, werden die am Signaleingang 3 des Bildschirmgeräts 1 anliegenden Bildsignale überwacht. In einem einfachen Fall erfüllen Bildsignale die vorbestimmten Kriterien, wenn sich beispielsweise der Bildinhalt eines anliegenden Bildsignals im Vergleich zu einem gespeicherten Bildinhalt eines Bildsignals nicht verändert.

Nach dem Einschalten ist das Bildschirmgerät 1 in einem Normalbetriebszustand Z1. In einem Schritt S1 prüft die Überwachungseinheit 11, ob eine Übergangsbedingung a, das heißt "Genügt das Bildsignal vorbestimmten Kriterien?", erfüllt ist. Bei positiver Feststellung geht das Bildschirmgerät 1 in einen Wartezustand Z2 über. Bei negativer Feststellung, das heißt das anliegende Bildsignal genügt den vorbestimmten Kriterien nicht, setzt die Überwachungseinheit 11 den Zeitmesser 10 auf einen Startwert zurück und das Bildschirmgerät 1 bleibt im Normalbetriebszustand Z1.

Ist das Bildschirmgerät in den Wartezustand Z2 übergegangen, prüft die Überwachungseinheit 11 in einem Schritt S2, ob eine Übergangsbedingung b, das heißt "Ist der aktuelle Wert des Zeitmessers 10 größer als ein vordefinierter Wert?" erfüllt ist. Bei positiver Feststellung geht das Bildschirmgerät 1 in einen Energiesparzustand Z3 über. Bei negativer Feststellung, das heißt der aktuelle Wert des Zeitmessers ist kleiner als ein vordefinierter Wert, prüft die Überwachungseinheit 11 in einem Schritt S3, entsprechend Schritt S1, ob die Übergangsbedingung a für ein nächstes anliegendes Bildsignal weiterhin erfüllt ist. Bei positiver Feststellung, bleibt das Bildschirmgerät 1 im Wartezustand Z2. Bei negativer Feststellung setzt die Überwachungseinheit 11 den Zeitmesser 10 auf den Startwert zurück und das Bildschirmgerät 1 geht in den Normalbetriebszustand Z1 über.

Ist das Bildschirmgerät in den Energiesparzustand Z3 übergegangen, prüft die Überwachungseinheit 11 in einem Schritt S4, entsprechend Schritt S1, ob die Übergangsbedingung a für anliegende Bildsignale erfüllt ist. Bei positiver Feststellung bleibt das Bildschirmgerät 1 im Energiesparzustand Z3. Bei negativer Feststellung setzt die Überwachungseinheit 11 den Zeitmesser 1.0 auf den Startwert zurück und steuert das Bildschirmgerät 1 zurück in den Normalbetriebszustand Z1.

Figur 4 zeigt einen Ausschnitt aus einem detaillierten Flussdiagramm mit einer bevorzugten Überprüfung des Bildinhalts anliegender Bildsignale im Schritt S1. In einem bevorzugten Fall erfüllen die Bildsignale die vorbestimmten Kriterien, wenn sich beispielsweise der Bildinhalt nicht verändert, oder wenn sich der Bildinhalt nach einem bestimmten Muster ändert. In einfachen Ausgestaltungen eines erfindungsgemäßen Verfahrens werden nur einzelne der genannten Kriterien geprüft.

In einem Schritt 1a prüft die Überwachungseinheit 11, ob eine Übergangsbedingung aa "der Bildinhalt hat sich nicht verändert" erfüllt ist. Bei positiver Feststellung geht das Bildschirmgerät 1 in den Wartezustand Z2 über. Bei negativer Feststellung prüft die Überwachungseinheit 11 in einem Schritt 1b, ob eine Übergangsbedingung ab "der Bildinhalt ändert sich nach einem bestimmten Muster" erfüllt ist. Bei positiver Feststellung geht das Bildschirmgerät 1 in den Wartezustand Z2 über. Bei negativer Feststellung, setzt die Überwachungseinheit 11 den Zeitmesser 10 auf den Startwert zurück und das Bildschirmgerät 1 geht in den Normalbetriebszustand Z1 über.

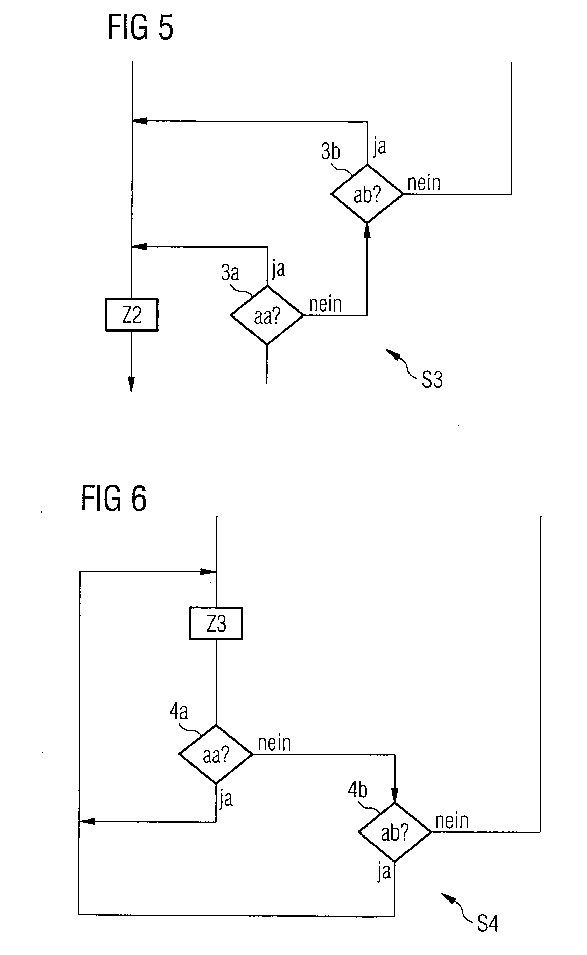

Figur 5 zeigt den relevanten Ausschnitt aus einem detaillierten Flussdiagramm für die Überprüfung der Bildsignale auch für Schritt S3.

In einem Schritt 3a prüft die Überwachungseinheit 11, ob die Übergangsbedingung aa erfüllt ist. Bei positiver Feststellung bleibt das Bildschirmgerät 1 im Wartezustand Z2. Bei negativer Feststellung prüft die Überwachungseinheit 11 in einem Schritt 3b, ob die Übergangsbedingung ab erfüllt ist. Bei positiver Feststellung bleibt das Bildschirmgerät 1 im Wartezustand Z2. Bei negativer Feststellung setzt die Überwachungseinheit 11 den Zeitmesser 10 auf den Startwert zurück und das Bildschirmgerät 1 geht in den Normalbetriebszustand Z1 über.

Figur 6 zeigt den relevanten Ausschnitt aus einem Flussdiagramm für die detaillierte Überprüfung der Bildsignale auch für Schritt S4.

In einem Schritt 4a prüft die Überwachungseinheit 11, ob die Übergangsbedingung aa erfüllt ist. Bei positiver Feststellung bleibt das Bildschirmgerät 1 im Energiesparzustand Z3. Bei negativer Feststellung prüft die Überwachungseinheit 11 in einem Schritt 4b, ob die Übergangsbedingung ab erfüllt ist. Bei positiver Feststellung bleibt das Bildschirmgerät 1 im Energiesparzustand Z3. Bei negativer Feststellung setzt die Überwachungseinheit 11 den Zeitmesser 10 auf den Startwert zurück und das Bildschirmgerät 1 geht in den Normalbetriebszustand Z1 über.

Bezugszeichenliste
- 1: Bildschirmgerät
- 2: Computer
- 3: Signaleingang
- 4: Anschlussleitung
- 5: Computermaus
- 6: Tastatur
- 7: Steuereinheit
- 8: Energiesparzustandssteuerung
- 9: Anzeigeeinheit
- 10: Zeitmesser
- 11: Überwachungseinheit

- Z1: Normalbetriebszustand
- Z2: Wartezustand
- Z3: Energiesparzustand

- a: Bildinhalt genügt vorbestimmten Kriterien
- b: aktueller Wert des Zeitmessers größer als ein vordefinierter Wert

- aa: Bildinhalt nicht verändert
- ab: Bildinhalt verändert nach bestimmtem Muster

- S1, S2, S3, S4: Verfahrensschritte
- 1a, 1b: Verfahrensschritte
- 3a, 3b: Verfahrensschritte
- 4a, 4b: Verfahrensschritte

## Patentansprüche

1. Bildschirmgerät (1) mit einer Anzeigeeinheit (9) und einem Signaleingang (3) zum Anschluss an einen Computer (2), wobei das Bildschirmgerät (1) eine Energiesparzustandssteuerung (8) aufweist,
**dadurch gekennzeichnet, dass**
die Energiesparzustandssteuerung (8) eine Überwachungseinheit (11) aufweist zur Feststellung, ob die am Signaleingang (3) anliegenden Bildsignale während einer vorbestimmten Zeit vorbestimmten Kriterien genügen, wobei die Energiesparzustandssteuerung (8) dazu eingerichtet ist, bei positiver Feststellung das Bildschirmgerät (1) in einen Energiesparzustand mit verringertem Energieverbrauch zu steuern.

2. Bildschirmgerät (1) nach Anspruch 1,
**dadurch gekennzeichnet, dass**
- die Energiesparzustandssteuerung (8) einen Zeitmesser (10) aufweist und dazu eingerichtet ist, den aktuellen Wert des Zeitmesser (10) mit einem vordefinierten Wert, der der vorbestimmten Zeit entspricht, zu vergleichen, und
- die Überwachungseinheit (11) dazu eingerichtet ist, den Zeitmesser (10) auf einen Startwert zurückzusetzen, wenn vor Erreichen des vordefinierten Wertes die Feststellung erfolgt, dass die am Signaleingang (3) anliegenden Bildsignale den vorbestimmten Kriterien nicht genügen.

3. Bildschirmgerät (1) nach Anspruch 1 oder 2,
**dadurch gekennzeichnet, dass**
die vorbestimmten Kriterien erfüllt sind, wenn sich der durch die Bildsignale bestimmte Bildinhalt während der vorbestimmten Zeit nicht ändert.

4. Bildschirmgerät (1) nach Anspruch 1 oder 2,
**dadurch gekennzeichnet, dass**
die vorbestimmten Kriterien erfüllt sind, wenn sich der durch die Bildsignale bestimmte Bildinhalt während der vorbestimmten Zeit nach einem festen Muster ändert.

5. Bildschirmgerät (1) nach einem der Ansprüche 1 bis 4,
**dadurch gekennzeichnet, dass**
die Überwachungseinheit (11) einen Bildspeicher zur Speicherung eines Bildinhalts aufweist.

6. Bildschirmgerät (1) nach Anspruch 5,
**dadurch gekennzeichnet, dass**
die Überwachungseinheit (11) einen Bildvergleicher aufweist, der einen in dem Bildspeicher gespeicherten ersten Bildinhalt mit einem zweiten Bildinhalt vergleicht.

7. Bildschirmgerät (1) nach Anspruch 6,
**dadurch gekennzeichnet, dass**
der zum Vergleich herangezogene zweite Bildinhalt in dem Bildspeicher gespeichert ist.

8. Bildschirmgerät (1) nach Anspruch 1 bis 4,
**dadurch gekennzeichnet, dass**
im Energiesparzustand des Bildschirmgeräts (1) die Energiesparzustandssteuerung (8) soweit aktiviert bleibt, dass sie Bildinhalte in den vom Computer (2) zum Bildschirmgerät (1) übertragenen Bildsignalen, die nicht den vorbestimmten Kriterien genügen, erkennt und bei positiver Feststellung das Bildschirmgerät (1) in den Normalbetriebszustand zurücksteuert.

9. Bildschirmgerät (1) nach Anspruch 1,
**dadurch gekennzeichnet, dass**
der vordefinierte Wert für die vorbestimmte Zeit in den Systemeinstellungen des Computers oder über ein Einstellmenü des Bildschirmgeräts (1) einstellbar ist.

10. Bildschirmgerät (1) nach einem der Ansprüche 1 bis 9,
**dadurch gekennzeichnet, dass**
eine Steuerung in den Energiesparzustand gemäß einem der Ansprüche 1 bis 9 deaktivierbar ist.

11. Bildschirmgerät (1) nach einem der Ansprüche 1 bis 9,
**dadurch gekennzeichnet, dass**
das Bildschirmgerät (1) dazu eingerichtet ist, durch eine Signalisierung von einem angeschlossenen Computer (2) in den Energiesparzustand gesteuert zu werden.

12. Bildschirmgerät (1) nach Anspruch 11,
**dadurch gekennzeichnet, dass** eine Steuerung in den Energiesparzustand durch eine Signalisierung von einem angeschlossenen Computer (2) deaktivierbar ist.

13. Verfahren zur Steuerung eines Bildschirmgeräts (1) ausgehend von einem Normalbetriebszustand (Z1) in einen Energiesparzustand (Z3) mit den Schritten:
■ im Normalbetriebszustand (Z1) Prüfen (S1), ob ein empfangener Bildinhalt vorbestimmten Kriterien (a) genügt; bei positiver Feststellung Steuern des Bildschirmgeräts (1) in einen Wartezustand (Z2);
■ im Wartezustand (Z2) Prüfen (S3), ob empfangene Bildinhalte den vorbestimmten Kriterien (a) genügen;
o wenn nein, Steuern des Bildschirmgeräts in den Normalbetriebszustand (Z1);
o wenn ja, Prüfen (S2), ob vorbestimmte Zeitkriterien (b) erfüllt sind; bei positiver Feststellung Steuern des Bildschirmgeräts in den Energiesparzustand (Z3).

14. Verfahren nach Anspruch 13,
**dadurch gekennzeichnet, dass** bei der Prüfung (S1, S3, S4), ob ein empfangener Bildinhalt vorbestimmten Kriterien genügt, einer oder mehrere der folgenden Teilschritte ausgeführt werden:
■ Prüfen (1a) durch Vergleich mit einem früher empfangenen Bildinhalt, ob sich der Bildinhalt nicht verändert (aa),
■ Prüfen (1b) durch Vergleich mit einem früher empfangenen Bildinhalt, ob sich der Bildinhalt nach einem festen Muster ändert (ab),
wobei die vorbestimmten Kriterien erfüllt sind, wenn in mindestens einem der Teilschritte die Prüfung zu einem positiven Ergebnis führt.

15. Verfahren nach Anspruch 13 oder 14,
**dadurch gekennzeichnet, dass** zur Prüfung der vorbestimmten Zeitbedingungen ein Zeitmesser (10) betrieben und überprüft wird, ob eine vorgegeben Zeitdauer abgelaufen ist.

16. Verfahren nach Anspruch 15,
**dadurch gekennzeichnet, dass** der Zeitmesser (10) auf einen Startwert zurückgesetzt wird, wenn eine Prüfung (S1, S3, S4) ergibt, dass empfangene Bildinhalte den vorbestimmten Kriterien (a) nicht genügen.

17. Verfahren nach einem der Ansprüche 13 bis 16,
**dadurch gekennzeichnet, dass** im Energiesparzustand (Z3) geprüft wird (S4), ob ein empfangener Bildinhalt den vorbestimmten Kriterien (a) genügt, und bei negativer Feststellung das Bildschirmgeräts (1) in den Normalbetriebszustand (Z1) gesteuert wird.
